# EUROPÄISCHE PATENTANMELDUNG

(11) **EP 1 997 392 A2**
(43) Veröffentlichungstag der Anmeldung: **03.12.2008**
(21) Anmeldenummer: 08450085.9
(22) Anmeldetag: 29.05.2008
(51) Int. Cl.: A23N 17/00, A23K 1/18

(54) **Verfahren und Vorrichtung zum Behandeln von getrocknetem Tierfutter, insbesondere Heu, Stroh und dgl.**

(30) Priorität: 31.05.2007 AT 8612007
(71) Anmelder: Reinsdorff, Christian, 9560 Feldkirchen (AT)
(72) Erfinder: Reinsdorff, Christian, 9560 Feldkirchen (AT)
(74) Vertreter: Hehenberger, Reinhard

(57) **Zusammenfassung**

Zum Behandeln von Heu oder Stroh mit Wasser ist ein Kanal 110 vorgesehen, dem von einem Dosierförderer 109 durch eine Zerkleinerungsvorrichtung 104 zerkleinertes Heu oder Stroh zugeführt wird. Das Heu oder Stroh wird vom Dosierförderer 109 in den Kanal 110 dosiert und im Kanal 110 von einem endlos umlaufenden Förderer 106 bis zum Austrag 111 bewegt und dabei mit über Düsen 113 in den Kanal 110 gesprühtes Wasser behandelt, um Staub, Pollen und Pilzsporen zu binden.

## Beschreibung

Die Erfindung betrifft ein Verfahren zum Behandeln von Futtermittel, insbesondere von getrocknetem Tierfutter, wie Heu oder Stroh, um in diesen Staub, Pollen, Pilzsporen od. dgl. zu binden, wobei das Futtermittel mit Wasser behandelt wird.

Durch die Ernte von Gras oder Stroh mit Hilfe von Mähwerken, die knapp über dem Boden arbeiten, und das maschinelle Wenden von Heu und Stroh, ist Heu und Stroh stark mit Staub und mit Pollen verunreinigt, was zu vermehrten Atemwegserkrankungen bei Tieren, insbesondere Pferden, führt, wenn Tiere dieses Futter fressen. Das mit Staub und Pollen beladene Futter ist auch für den Heilungsprozess anderer Atemwegserkrankungen, die nicht durch das Futter bedingt sind, hinderlich.

Ein Verfahren der eingangs genannten Gattung ist aus der DE 35 05 067 A bekannt. In der DE 35 05 067 A wird zur Lösung des Problems von mit Staub beladenem Heu beim Verfüttern an Pferde vorgeschlagen, die Heuballen aufzuschneiden, in einen Korb zu stecken und mit Hilfe dieses Korbes in ein Wasserbecken einzutauchen, sodass das Heu mit Wasser getränkt wird. Dann soll der Korb mit dem getränkten Heu aus dem Bad gehoben, abtropfen gelassen werden, worauf das Heu zum Füttern verwendet werden kann. Durch das Abtropfen lassen des Wassers vom Heu sollen einerseits Staubteilchen aus dem Heu herausgewaschen und andererseits verbleibende Staubteilchen am Heu haften bleiben, sodass sie beim Fressen nicht in die Atemorgane des Pferdes gelangen können.

Der Erfindung liegt die Aufgabe zu Grunde, ein Verfahren und eine Vorrichtung zur Verfügung zu stellen, mit welchen Tierfutter, insbesondere Heu oder Stroh, so behandelt werden kann, dass dieses nach der Behandlung zum Füttern von Tieren, insbesondere von Pferden mit Atemwegserkrankungen, zur Unterstützung des Heilungsprozesses oder vorbeugend, um Atemwegserkrankungen, die durch Staub, Pollen, Pilzsporen od. dgl. entstehen können, zu verhindern, verwendet werden kann.

Gelöst wird diese Aufgabe, was das Verfahren betrifft, mit einem Verfahren, welches die Merkmale des unabhängigen Anspruch aufweist. Bei dem erfindungsgemäßen Verfahren wird das Futtermittel, bevor es mit Wasser behandelt wird, insbesondere durch Fräsen, zerkleinert, und dann das zerkleinerte Futtermittel während einer beispielsweise horizontalen Bewegung mit Wasser behandelt.

Im Einzelnen kann in einer Ausführungsform so gearbeitet werden, dass das Futtermittel, bevor es mit Wasser behandelt wird durch Schneiden zerkleinert und mittels Schlegel in der Struktur zerstört wird. Dadurch wird sichergestellt, dass sämtlicher Staub, sowie alle Pollen, Pilzsporen und dgl. freigesetzt werden, und danach durch die Behandlung mit Wasser an das Futtermittel gebunden werden. Das zerkleinerte Futtermittel und Staub, Pollen, Pilzsporen od. dgl. werden beispielsweise zwangsweise und in einer bevorzugt im Wesentlichen horizontalen Bewegung durch ein Wasserbad bewegt oder während dieser Bewegung mit Wasser behandelt.

Die Erfindung betrifft auch eine Vorrichtung zum Ausführen des Verfahrens mit den Merkmalen des Vorrichtungshauptanspruches.

Gemäß der Erfindung ist diese Vorrichtung beispielsweise dadurch gekennzeichnet, dass eine Vorrichtung zum Zerkleinern von Futtermittel und eine Fördereinrichtung für das Futtermittel vorgesehen sind, dass die Fördereinrichtung einem Kanal zugeordnet ist, dass zwischen der Vorrichtung zum Zerkleinern von Futtermittel und dem Kanal eine Leiteinrichtung für zerkleinertes Futtermittel vorgesehen ist, dass zwischen der Leiteinrichtung und dem Kanal ein Dosierförderer für zerkleinertes Futtermittel vorgesehen ist, und dass das abgabeseitige Ende des Dosierförderers zwischen der im Kanal vorgesehenen Fördereinrichtung und dem Boden bzw. der aufgabeseitigen Wand des Kanals angeordnet ist.

Bevorzugte und vorteilhafte Ausgestaltungen des erfindungsgemäßen Verfahrens und der erfindungsgemäßen Vorrichtung sind Gegenstand der Unteransprüche.

Mit dem erfindungsgemäßen Verfahren und der erfindungsgemäßen Vorrichtung ist es möglich, im Durchlaufverfahren Tierfutter, insbesondere getrocknetes Tierfutter, wie Heu oder Stroh, so zu behandeln, dass das behandelte Tierfutter ohne Weiteres zum Füttern von Tieren, insbesondere zum Füttern von Pferden, verwendet werden kann.

Durch das erfindungsgemäße Verfahren bzw. in der erfindungsgemäßen Vorrichtung werden Staub und Pollen, sowie Pilzsporen und Ähnliches wegen der Behandlung mit Wasser an das Futter gebunden und sind daher nicht mehr schädlich, da sie nicht mehr in die Atemwege sondern in den Verdauungstrakt kommen, in dem sie nicht mehr schädlich sind.

Insbesondere verhindert der Einsatz des erfindungsgemäßen Verfahrens bzw. der erfindungsgemäßen Vorrichtung das Auftreten von Atemwegs - Erkrankungen, wie Bronchitis, Dämpfigkeit (COB), Lungenentzündung, Nasen- und Lungenrotz.

Mit dem erfindungsgemäßen Verfahren bzw. mit der erfindungsgemäßen Vorrichtung können insbesondere sämtliche Arten von Heu oder von Stroh in gepresster oder in loser Form, behandelt werden, um sie zur Tierfütterung geeignet zu machen.

Mit der erfindungsgemäßen Arbeitsweise und mit der erfindungsgemäßen Vorrichtung werden die Nachteile der herkömmlichen Verfahren, z.B. das Eintauchen von Heu in Wasser (vgl. DE 35 05 067 A)oder Bespritzen mit Wasser oder das Behandeln mit Wasserdampf vermieden. Auch sind die Nachteile des Ausblasens des Futters nicht gegeben, da wertvolle Futterbestandteile erhalten bleiben, wenn das Futter erfindungsgemäß behandelt wird.

Ein Vorteil des erfindungsgemäßen Verfahrens und der erfindungsgemäßen Vorrichtung liegt darin, dass die einzelnen Halme des Futtermittels nicht nur zerkleinert werden, sondern auch in ihrer Struktur zerstört werden, und so der gesamte Staub-, Pollen-, Pilzsporenanteil freigesetzt wird, insbesondere auch derjenige Anteil an Staub, Pollen, Pilzsporen od. dgl., der sich im Inneren von Halmen des Futtermittels befindet.

Das erfindungsgemäße Verfahren und die erfindungsgemäße Vorrichtung erlauben es, dem Futtermittel Medikamente, wie ätherische Öle oder Salz, im Durchlauf zuzusetzen.

Die Wirkungsweise des erfindungsgemäßen Verfahrens kann gesteigert werden, indem mit warmem Wasser gearbeitet wird.

Weitere Einzelheiten und Merkmale der Erfindung ergeben sich aus der nachstehenden Beschreibung bevorzugter Ausführungsbeispiele.

Es zeigt:
Fig. 1 schematisch und in Seitenansicht eine erfindungemäße Vorrichtung in einer ersten Ausführungsform,
Fig. 2 die Vorrichtung aus Fig. 1 in Schrägansicht (teilweise weggebrochen),
Fig. 3 eine andere Schrägansicht der Vorrichtung aus Fig. 1,
Fig. 4 in Seitenansicht (schematisch) eine andere Ausführungsform einer erfindungsgemäßen Vorrichtung,
Fig. 5 und 6 die Ausführungsform der Fig. 4 in Schrägansichten,
Fig. 7 eine Einzelheit der Vorrichtung von Fig. 4 bis 6 und
Fig. 8 eine Einzelheit der Vorrichtung von Fig. 4 bis 6 im Bereich der Zerkleinerungsvorrichtung.

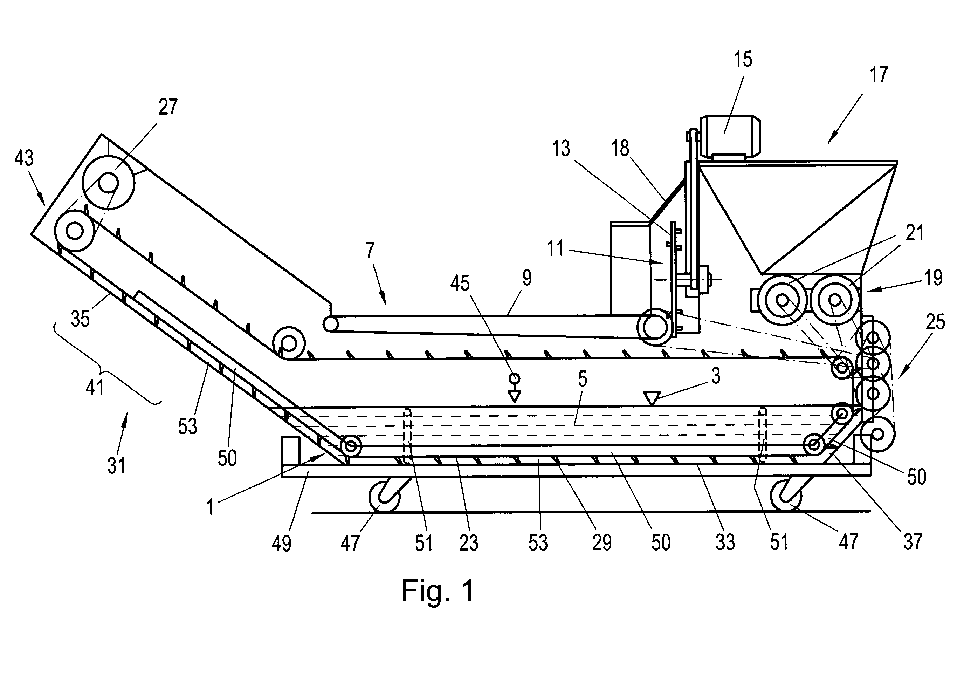

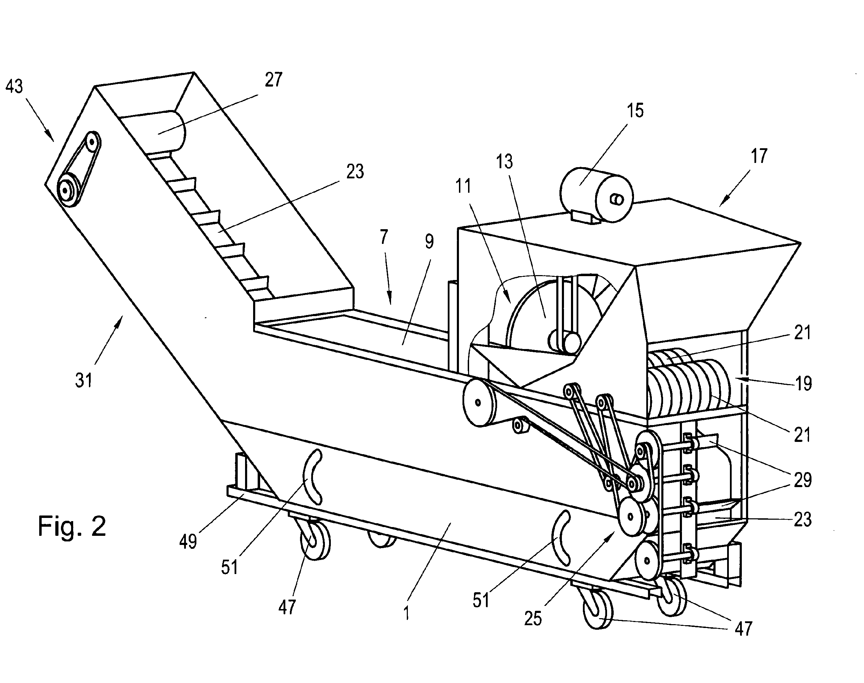

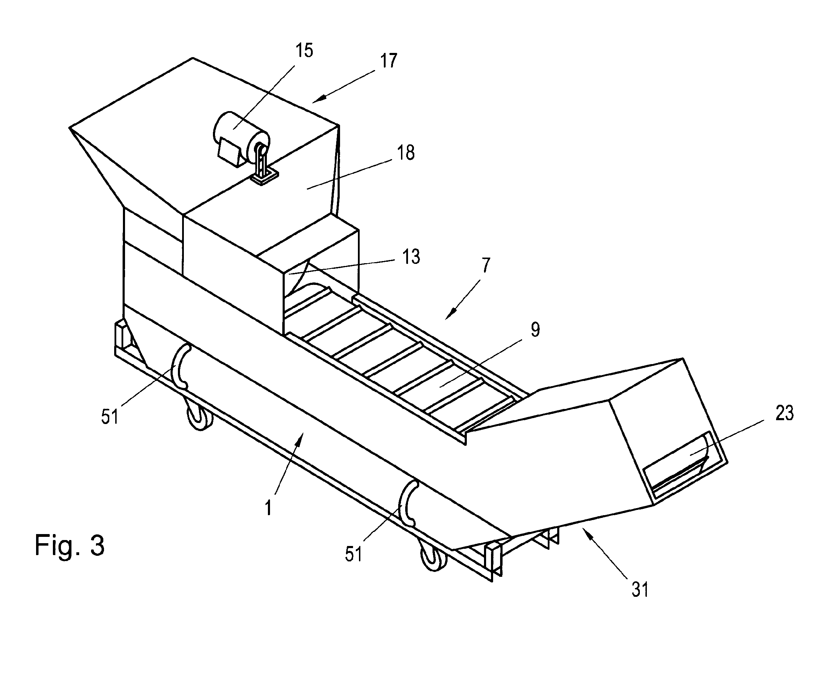

In der in den Fig. 1 bis 3 gezeigten Ausführungsform besitzt die erfindungsgemäße Vorrichtung, mit welcher das erfindungemäße Verfahren in vorteilhafter Weise ausgeführt werden kann, eine Wanne 1, die bis zu dem vorbestimmten Niveau 3 mit Wasser (Wasserbad 5) gefüllt ist. Das Wasser kann erwärmt werden (beispielsweise auf 60°C), um die Wirksamkeit der Behandlung des Futtermittels zu erhöhen. Warmes Wasser kann über die Hauswasseranlage der Wanne 1 zugeführt werden. Eine Heizung in der Wanne 1 kann eingebaut werden, diese dient aber vornehmlich dem Frostschutz. Über eine externe Warmwasserquelle kann ca. 60°C warmes Wasser zugeführt und verwendet werden (nach Abkühlung in der Wanne ca. 40°C). Diese Temperatur reicht zur Verbesserung der Wirkung von allenfalls zugesetzten ätherischen Ölen aus.

Des Weiteren können dem Wasserbad 5 in der Wanne 1 Zusatzstoffe zugesetzt sein. Solche Zusatzstoffe können ätherische Öle und/oder ein Salz (beispielsweise wird handelsübliches Futtersalz zugesetzt) sein.

Die Wanne 1 ruht auf einem Rahmen 49, der auf Rädern, z.B. Lenkrollen 47, verfahrbar ist.

Oberhalb der Wanne 1 ist eine Zuführvorrichtung 7 vorgesehen, mit der das zu behandelnde Futtermittel, wie Heu oder Stroh, aufgegeben und mit Hilfe eines Zuführförderbandes 9 zu einer Zerkleinerungsvorrichtung 11 gefördert wird. Die Zerkleinerungsvorrichtung 11 ist im gezeigten Ausführungsbeispiel eine um eine lotrechte Achse rotierende Frässcheibe 13.

Die Frässcheibe 13 wird von einem Motor 15 angetrieben.

Von der Frässcheibe 13 der Zerkleinerungsvorrichtung 11 wird zerkleinertes Futtermittel (Heu oder Stroh) in ein Gehäuse 17 mit einer um die Frässcheibe 13 herum angeordneten, schrägen Prallfläche 18 geschleudert, durch welche nach hinten geschleudertes Heu oder Stroh nach unten zu einer Dosiereinrichtung 19 gelangt. Die Dosiereinrichtung 19 ist im gezeigten Ausführungsbeispiel eine Einrichtung mit zwei Förderwalzen 21, die zerkleinertes Heu oder Stroh einem Förderer 23, der in der Wanne 1 angeordnet ist, zuführen.

Vorgesehen ist eine Getriebe 25, das vom Förderer 23 angetrieben sowohl den Dosierförderer 19 als auch das Zuführförderband 9 für das Zuführen von Heu oder Stroh zur Frässcheibe 13 antreibt. Der Förderer 23 selbst wird von einem Motor 27 angetrieben.

Der in der Wanne 1 vorgesehene Förderer 23 besitzt ein endlos umlaufendes Förderglied mit Mitnehmern 29, die nach außen weisen. Das Förderglied des Förderers 23 in der Wanne 1 ist so angeordnet, dass es im Wasserbad 5 untergetaucht ist, und nur im Bereich der Dosiereinrichtung 19 und im Bereich des Austrages 31 für behandeltes Futtermittel aus dem Wasserbad 5 heraus bewegt wird.

Die Dosiereinrichtung 19 fördert zerkleinertes Heu oder Stroh in den Bereich zwischen dem endlos umlaufenden Förderglied des Förderers 23 und dem Boden 33 der Wanne 1 bis zu einer austragseitig vorgesehenen, schrägen Wand 35 der Wanne 1, so dass Heu oder Stroh zwangsweise im Wasserbad 5 untergetaucht entlang der eintragseitigen schrägen Wand 37 der Wanne 1 schräg nach unten, dann weiter entlang des Bodens 33 (horizontal) und entlang der austragsseitigen schrägen Wand 35 wieder aus dem Wasserbad 5 heraus bewegt wird. Während des Bewegens im Wasserbad 5 wird Futtermittel, wie Heu oder Stroh, mit Wasser behandelt, um Staub und Pollen sowie Pilzsporen zu entfernen bzw. an das Futtermittel zu binden.

Im Bereich der schrägen Wand 35, die austragseitig der Wanne 1 angeordnet ist, ist ein Abtropfbereich 41 vorgesehen, in dem vom Futtermittel Wasser abtropft, sodass es nicht zu feucht ist und zur Fütterung verwendet werden kann.

Das Entfernen von überschüssigem Wasser aus dem behandelten Futtermittel (z.B. Heu oder Stroh) kann durch Auspressen unterstützt werden, wobei das Auspressen mit Hilfe von Auspressrollen bewirkt werden kann (nicht gezeigt).

Vom Austrag 43 fällt behandeltes Futtermittel (z.B. Heu oder Stroh) nach unten, beispielsweise in einen Schubkarren oder ähnliches, worauf es beispielsweise unmittelbar der Tierfütterung zugeführt werden kann.

In der Wanne 1 ist eine Einrichtung, z.B. ein schwimmergesteuertes Ventil 45 oder ähnliches, vorgesehen, die den Pegelstand 3 von Wasser in der Wanne 1 konstant hält. Wenn der Pegelstand unter einen vorbestimmten Wert sinkt, wird, ggf. automatisch, Wasser nachgefüllt.

Der Förderer 23 wird von Zwischenwänden 50 ("Kanalbleche"), die zusammen mit dem Boden 33 und den Wänden 35 und 37 einen Kanal 53 bilden, nach unten gehalten. So ist verhindert, dass zu behandelndes Futtermittel aufschwimmt. Der unterhalb der Zwischenwände 50 liegende Bereich der Wanne 1 steht mit dem oberhalb liegenden Bereich über Verbindungsleitungen 51 (Schläuche) in Verbindung.

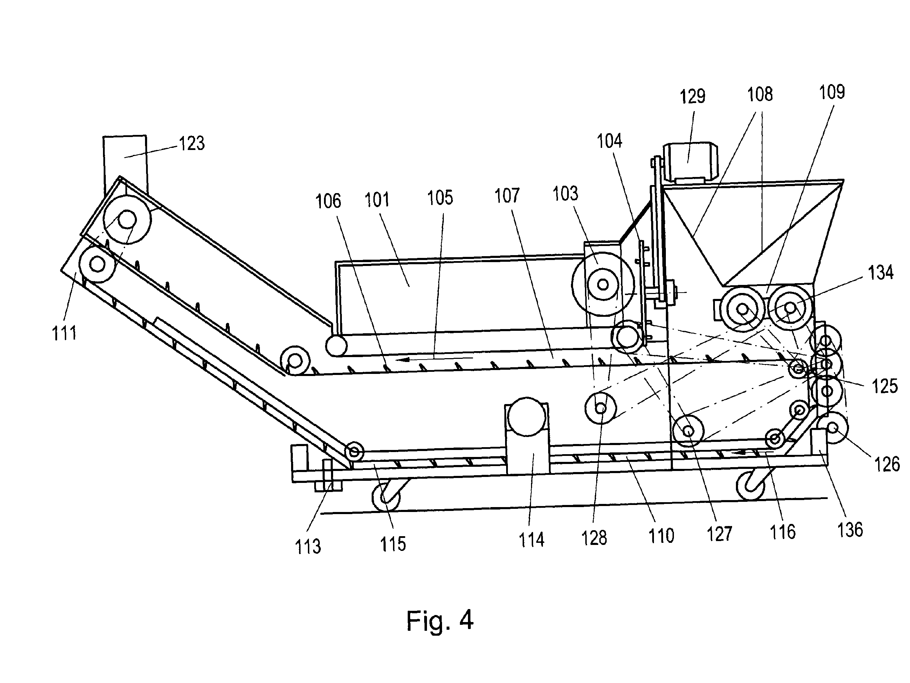

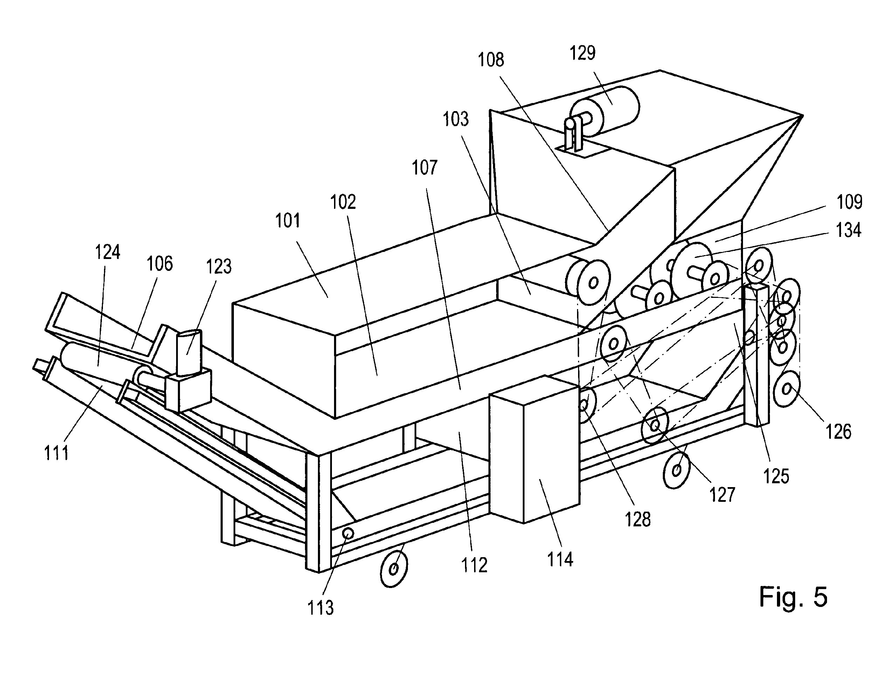

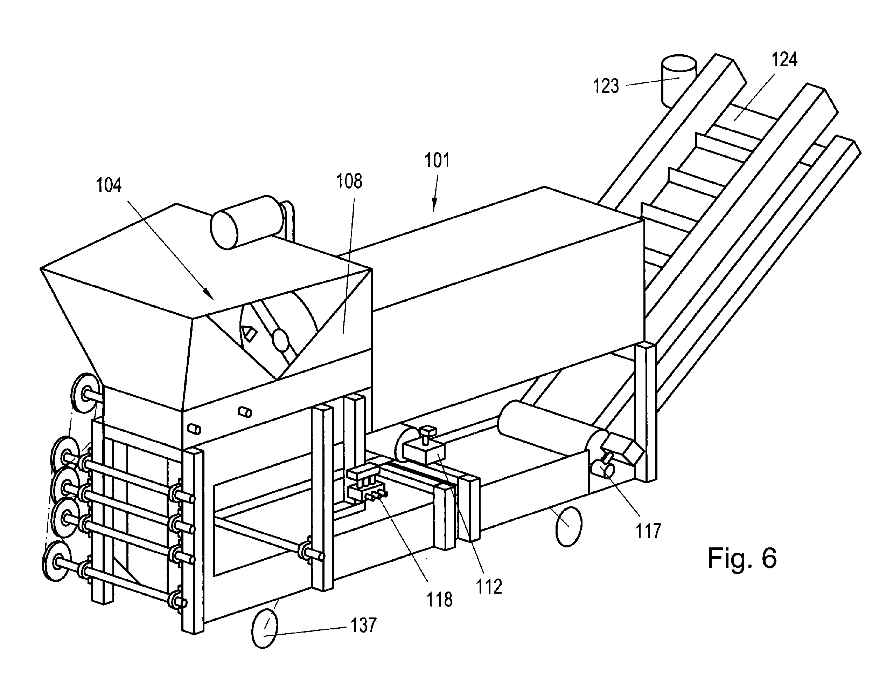

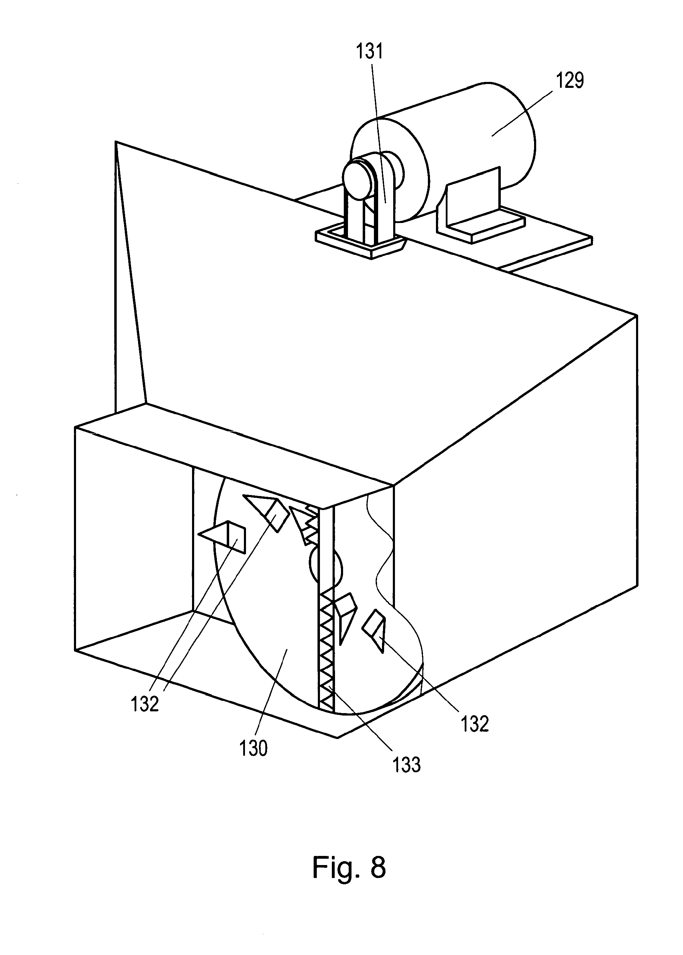

Nachstehend wird mit Bezug auf die Fig. 4 bis 8 eine weitere Ausführungsform der erfindungsgemäßen Vorrichtung erläutert.

Futter wird über die Futteraufnahme 101 mit einer Fördereinrichtung 102 (Förderband) einer Einziehvorrichtung 103 zugeführt. Die Einziehvorrichtung 103 transportiert Futtermittel zu einer Schneid- u.

Schlegelvorrichtung 104, die Futtermittel auf eine durchschnittliche Halmlänge von ca. 12 cm schneidet, und die Struktur des einzelnen Halmes zerstört. Dadurch wird gewährleistet, dass Staub-, Pollen- und Sporenanteile vollständig freigesetzt werden.

Die Schneid- u. Schlegeleinrichtung 104 erzeugt einen durch einen Pfeil 105 angedeuteten Luftstrom, der den Großteil vom freigesetzten Staub, Pollen und Sporen über die Fördereinrichtung 106, mit einem endlosen, mit nach außen weisenden Mitnehmern versehenen Förderband, bläst. Die Fördereinrichtung 106 ist in dem der Schneid- und Schlegeleinrichtung 104 benachbarten Bereich 107 nass und sauber und bindet dadurch den über die Fördereinrichtung 106 geblasenen Staub, Sporen und Pollen.

Hinter der Schneid- und Schlegelvorrichtung 104 wird Futtermittel über schiefe Leitflächen (8), die um die Schneid- und Schlegelvorrichtung 104 herum angeordnet sind, einer Dosiervorrichtung 109 sowie der Fördereinrichtung 106 aufgegeben. Die Fördereinrichtung 106 transportiert Futtermittel in einen Kanal 110. Der Kanal 110 verläuft zuerst senkrecht nach unten, dann horizontal, bis der Kanal 110 schräg nach oben zum Auswurf 111 führt. Der Kanal 110 entspricht insbesondere im Bereich senkrecht nach unten, horizontal und schräg nach oben, dem Querschnitt der Fördereinrichtung 106. Eine Hochdruckpumpe 112 sprüht über Düsen 113 nur soviel Wasser in den Kanal 110 wie das Futtermittel aufnehmen und mitnehmen kann. Die Wassermenge wird über einen Sensor 119 gemessen. Über diesen Sensor 119 einer Steuerung im Schaltschrank 114 und über Magnetventile 118, die den Düsen 113 zugeordnet sind, wird die Wassermenge geregelt.

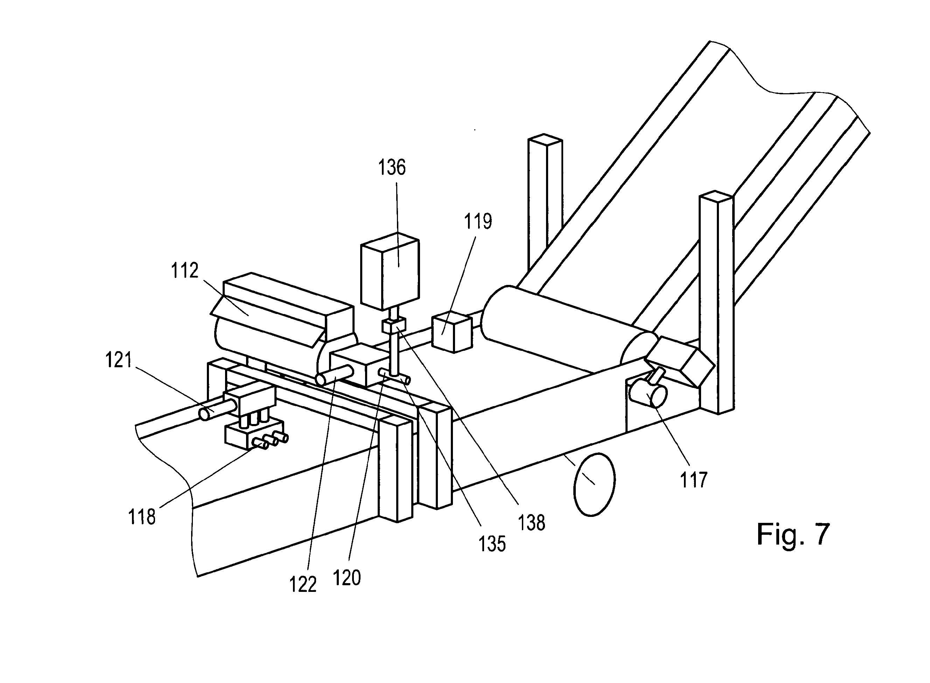

Der Wasseranschluss erfolgt beispielsweise über eine mit Hauswasserleitungen kompatible Kupplung 120. Zwischen diese Kupplung und der Hauswasserleitung können, bei Bedarf, über ein T-Stück 135 und einen Behälter 136 Medikamente oder ähnliches beigemengt werden. Die Dosierung erfolgt über eine Regeleinrichtung 138. Die Verbindung zwischen Hochdruckpumpe 112 und Magnetventilen 118 erfolgt über Anschlüsse 121 und 122 (Fig. 7).

Im Bereich des Überganges 115 des Kanals 110 vom horizontalen Bereich in den Bereich, der schräg nach oben zum Auswurf 111 führt, bildet sich bedingt durch den sich in Förderrichtung (Pfeil 116) bewegende Förderband des Förderers 106 ein Wasserstau, in dem bisher nicht gebundener Staub-, Sporen- und Pollenanteil gebunden wird.

Die Düsen 113 haben in erster Linie die Aufgabe, die Fördereinrichtung 106 sauber und nass in den Bereich 107 gelangen zu lassen. Eine weitere Aufgabe ist das Einbringen des Wassers in den Kanal 110. Nach Beendigung der Behandlung von Futtermittel wird über die Düsen 113 wieder Wasser in den Kanal 110 gesprüht, und dadurch die Fördereinrichtung 106 gereinigt. Schließlich kann Wasser über einen motorbetätigten Kugelhahn 117 aus der Anlage entfernt werden.

Die Fördereinrichtung 106 wird durch einen Getriebemotor 123 und eine Antriebstrommel 124 angetrieben. Über die Umlenktrommel 125 der Fördereinrichtung 106 wird das Getriebe 126 angetrieben. Über eine Zwischenwelle 127 wird die Fördereinrichtung 102 angetrieben. Über eine Welle der Dosiervorrichtung 109 und eine weitere Zwischenwelle 128 wird die Einziehvorrichtung 103 angetrieben. Die Dosiervorrichtung 109 wird direkt vom Getriebe 126 angetrieben.

Die Schneid- u. Schlegelvorrichtung 104 ist im in Fig. 4 bis 8 gezeigten Ausführungsbeispiel eine um eine waagrechte Achse rotierende Frässcheibe 130. Die Frässcheibe 130 wird über einen Zahnriemen 131 von einem Motor 129 angetrieben. Auf der Frässcheibe 130 sind Messer 132 und ein Schlegelkamm 133 angeordnet. Die Messer 132 schneiden das Futtermittel auf die ca. 12 cm Länge. Der Schlegelkamm 133 zerstört zusätzlich den Heuhalm, und schleudert ihn über die Prallflächen der schiefen Ebenen 108, hinter die Schneid- u. Schlegelvorrichtung 104. Ein kleiner Teil fällt dann vor der Dosiereinrichtung 109 auf die Fördereinrichtung 106. Der größere Teil wird über die Dosiereinrichtung 109 der Fördereinrichtung 106 zugeführt.

Die Dosiereinrichtung 109 ist im gezeigten Ausführungsbeispiel eine Einrichtung mit zwei gegenläufigen Förderwalzen 134, die zerkleinertes Heu oder Stroh einer Fördereinrichtung 106, die im Kanal 110 angeordnet ist, zuführt.

Zusammenfassend kann ein Ausführungsbeispiel der Erfindung wie folgt beschrieben werden:

Zum Behandeln von Heu oder Stroh mit Wasser ist ein Kanal 110 vorgesehen, dem von einem Dosierförderer 109 durch eine Zerkleinerungsvorrichtung 104 zerkleinertes Heu oder Stroh zugeführt wird. Das Heu oder Stroh wird vom Dosierförderer 109 in den Kanal 110 dosiert und im Kanal 110 von einem endlos umlaufenden Förderer 106 bis zum Austrag 111 bewegt und dabei mit über Düsen 113 in den Kanal 110 gesprühtes Wasser behandelt, um Staub, Pollen und Pilzsporen zu binden.

## Patentansprüche

1. Verfahren zum Behandeln von Futtermittel, insbesondere getrocknetem Futtermittel, wie Heu oder Stroh, um dieses von Staub, Pollen, (Pilz-)sporen od. dgl. zu befreien, wobei das Futtermittel mit Wasser behandelt wird, **dadurch gekennzeichnet, dass** das Futtermittel, bevor es mit Wasser behandelt wird, insbesondere durch Fräsen, zerkleinert wird und dass das zerkleinerte Futtermittel während einer im Wesentlichen horizontalen Bewegung mit Wasser behandelt wird.

2. Verfahren nach Anspruch 1, **dadurch gekennzeichnet, dass** das Futtermittel mit warmem Wasser behandelt wird.

3. Verfahren nach Anspruch 1 oder 2, **dadurch gekennzeichnet, dass** das Futtermittel mit Wasser behandelt wird, dem Zusätze wie ätherische Öle und/oder Salz, insbesondere Futtersalz, zugesetzt sind.

4. Verfahren nach einem der Ansprüche 1 bis 3, **dadurch gekennzeichnet, dass** zerkleinertes Futtermittel nach dem Zerkleinern zunächst in einer nach unten gerichteten Bewegung in den Bereich, in dem es mit Wasser behandelt wird, eingeführt wird.

5. Verfahren nach einem der Ansprüche 1 bis 4, **dadurch gekennzeichnet, dass** das Futtermittel in einer schräg nach oben gerichteten Bewegung aus dem Bereich, in dem es mit Wasser behandelt wird, entfernt wird.

6. Vorrichtung nach einem der Ansprüche 1 bis 5, **dadurch gekennzeichnet, dass** das zerkleinerte Futtermittel mit Wasser gewaschen wird, indem es zwangsweise und in einer im Wesentlichen horizontalen Bewegung durch ein Wasserbad bewegt wird.

7. Verfahren nach einem der Ansprüche 1 bis 6, **dadurch gekennzeichnet, dass** zerkleinertes Futtermittel nach dem Zerkleinern zunächst in einer nach unten gerichteten Bewegung in das Wasserbad eingeführt wird.

8. Verfahren nach einem der Ansprüche 1 bis 7, **dadurch gekennzeichnet, dass** das Futtermittel in einer schräg nach oben gerichteten Bewegung aus dem Wasserbad entfernt wird.

9. Verfahren nach einem der Ansprüche 1 bis 8, **dadurch gekennzeichnet, dass** das Futtermittel zum Abtropfen von Wasser über eine gelochte Fläche bewegt wird.

10. Verfahren nach einem der Ansprüche 1 bis 9, **dadurch gekennzeichnet, dass** Wasser aus dem Futtermittel abgepresst wird.

11. Vorrichtung zum Ausführen des Verfahrens nach einem der Ansprüche 1 bis 10 mit einer mit Wasser gefüllten Wanne (1), **dadurch gekennzeichnet, dass** eine Vorrichtung (11) zum Zerkleinern von Futtermittel und eine Fördereinrichtung (23) für das Futtermittel vorgesehen sind, dass die Fördereinrichtung (23) dem Boden (33) der Wanne (1) zugeordnet ist, dass zwischen der Vorrichtung (11) zum Zerkleinern von Futtermittel und der Wanne (1) eine Leiteinrichtung für zerkleinertes Futtermittel vorgesehen ist, dass zwischen der Leiteinrichtung (17) und der Wanne (1) ein Dosierförderer (19) für zerkleinertes Futtermittel vorgesehen ist, und dass das abgabeseitige Ende des Dosierförderers (19) zwischen der in der Wanne (1) vorgesehenen Fördereinrichtung (23) und dem Boden (29) bzw. der aufgabeseitigen Wand (37) der Wanne (1) angeordnet ist.

12. Vorrichtung nach Anspruch 11, **dadurch gekennzeichnet, dass** der Vorrichtung (11) zum Zerkleinern von Futtermittel ein Zuführförderer (7) zugeordnet ist.

13. Vorrichtung nach Anspruch 11 oder 12, **dadurch gekennzeichnet, dass** die Vorrichtung (11) zum Zerkleinern von Futtermittel eine Fräse, insbesondere eine scheibenförmige Fräse (13) ist.

14. Vorrichtung nach einem der Ansprüche 11 bis 13, **dadurch gekennzeichnet, dass** die Leiteinrichtung ein Gehäuse (17) mit mehreren Prallflächen (18) ist, wobei das Gehäuse (17) oberhalb der Wanne (1) angeordnet und zur Wanne (1) hin offen ist.

15. Vorrichtung nach einem der Ansprüche 11 bis 14, **dadurch gekennzeichnet, dass** der Dosierförderer (19) von zwei sich gegensinnig drehenden Walzen (21) gebildet ist.

16. Vorrichtung nach einem der Ansprüche 11 bis 15, **dadurch gekennzeichnet, dass** eine Abtropfstrecke vorgesehen ist, wobei die Abtropfstrecke (41) von einem schräg ausgerichteten, über dem Pegelstand (3) von Wasser in der Wanne (1) angeordneten, gelochten Wandteil der Wanne (1) gebildet ist.

17. Vorrichtung nach einem Ansprüche 11 bis 16, **dadurch gekennzeichnet, dass** die in der Wanne (1) vorgesehene Fördereinrichtung (23) bis in den Bereich der Abtropfstrecke (41) reicht.

18. Vorrichtung nach einem der Ansprüche 11 bis 17, **dadurch gekennzeichnet, dass** die Wanne (1) an ihrer Aufgabeseite für zerkleinertes Futtermittel, insbesondere ihrem der Abgabeseite des Dosierförderers (19) zugeordnetem Ende, eine schräge Wand (37) aufweist.

19. Vorrichtung nach einem der Ansprüche 11 bis 18, **dadurch gekennzeichnet, dass** die Wanne (1) eine zum Abtropfbereich (41) hin schräge Wand (35) aufweist.

20. Vorrichtung nach Anspruch 18 und 19, **dadurch gekennzeichnet, dass** der Boden (33) der Wanne (1) zwischen den schrägen Wänden (35, 37) im Wesentlichen horizontal ausgerichtet ist.

21. Vorrichtung nach einem der Ansprüche 11 bis 20, **dadurch gekennzeichnet, dass** in der Wanne (1) eine Einrichtung (45) zum Erfassen des Pegelstandes (3) des Wasserbades (5) in der Wanne (1) vorgesehen ist.

22. Vorrichtung nach Anspruch 21, **dadurch gekennzeichnet, dass** die Einrichtung zum Erfassen des Pegelstandes (3) funktionsmäßig mit einer Nachfüllvorrichtung für Wasser in das Wasserbad (5) verbunden ist.

23. Vorrichtung nach Anspruch 22, **dadurch gekennzeichnet, dass** die Einrichtung ein schwimmgesteuertes Ventil (45) ist.

24. Vorrichtung nach einem der Ansprüche 11 bis 23, **dadurch gekennzeichnet, dass** dem Wasserbad (5) in der Wanne (1) eine Heizeinrichtung zugeordnet ist.

25. Vorrichtung nach einem der Ansprüche 11 bis 24, **dadurch gekennzeichnet, dass** der Förderer (23) wenigstens teilweise in einem in der Wanne (1) vorgesehenen Kanal (53) geführt ist.

26. Vorrichtung nach Anspruch 25, **dadurch gekennzeichnet, dass** der Kanal (53) nach oben durch Zwischenwände (50) und nach unten durch den Boden (33) und ggf. die schrägen Wände (35, 37) der Wanne (1) begrenzt ist.

27. Vorrichtung nach Anspruch 25 oder 26, **dadurch gekennzeichnet, dass** der Kanal (53) mit dem Wasserbad (5) in der Wanne (1) über wenigstens eine Leitung (51) verbunden ist.

28. Vorrichtung nach Anspruch 27, **dadurch gekennzeichnet, dass** die Leitung (51) außerhalb der Wanne (1) angeordnet ist.

29. Vorrichtung zum Ausführen des Verfahrens nach einem der Ansprüche 1 bis 10, **dadurch gekennzeichnet, dass** eine Vorrichtung (103) zum Zerkleinern von Futtermittel und eine Fördereinrichtung (106) für das Futtermittel vorgesehen ist, dass die Fördereinrichtung (106) über eine Dosiervorrichtung (109) mit zerkleinertem Futtermittel beaufschlagt ist, dass das endlose Förderglied der Fördereinrichtung (106) in einem Kanal (110) geführt ist und dass im Kanal (110) Düsen (113) für das Einsprühen von Wasser zum Behandeln des zerkleinerten Futtermittels zugeordnet sind und dass am Ende eines schräg nach oben aufsteigenden Bereichs des Kanals (110) ein Austrag (111) für behandeltes Futtermittel vorgesehen ist.

30. Vorrichtung nach Anspruch 29, **dadurch gekennzeichnet, dass** die Zerkleinerungsvorrichtung (104) als Schneid- und Schlegelvorrichtung ausgebildet ist.

31. Vorrichtung nach Anspruch 30, **dadurch gekennzeichnet, dass** die Schneid- und Schlegelvorrichtung eine um eine horizontale Achse rotierende Frässcheibe (130) und einen Schlegelkamm (133) aufweist.

32. Vorrichtung nach einem der Ansprüche 29 bis 31, **dadurch gekennzeichnet, dass** von der Schneid- und Zerkleinerungsvorrichtung (103) ein Luftstrom (Pfeil 105) gebildet wird, der auf das sich außerhalb des Kanals (110) bewegende Trum des Fördergliedes des Förderers (106) gerichtet ist und dessen Bewegungsrichtung entgegengesetzt ist.

33. Vorrichtung nach einem der Ansprüche 29 bis 32, **dadurch gekennzeichnet, dass** ein Zuführförderer (102) für das Zuführen von Futtermittel zur Zerkleinerungsvorrichtung (104) vorgesehen ist.
